# EUROPÄISCHE PATENTSCHRIFT

(11) **EP 1 680 309 B1**
(45) Veröffentlichungstag und Bekanntmachung des Hinweises auf die Patenterteilung: **09.04.2008**
(21) Anmeldenummer: 04765840.6
(22) Anmeldetag: 06.10.2004
(51) Int. Cl.: B60R 16/02

(54) **VERFAHREN UND VORRICHTUNG ZUR EINSTELLUNG BENUTZERABHÄNGIGER PARAMETERWERTE**
METHOD AND DEVICE FOR SETTING USER-DEPENDENT PARAMETER VALUES
PROCEDE ET DISPOSITIF DE REGLAGE DE VALEURS PARAMETRIQUES DEPENDANT DE L'UTILISATEUR

(30) Priorität: 30.10.2003 DE 10350715
(43) Veröffentlichungstag der Anmeldung: 19.07.2006
(73) Patentinhaber: Bayerische Motoren Werke Aktiengesellschaft, 80809 München (DE)
(72) Erfinder: SIRCH, Ottmar, 85560 Ebersberg (DE); HEIDER, Andreas, 80634 München (DE)
(74) Vertreter: Grüter, Klaus Peter
(86) Internationale Anmeldenummer: PCT/EP2004/011141
(87) Internationale Veröffentlichungsnummer: WO 2005/047062

(56) Entgegenhaltungen:
- EP-A- 1 211 141
- DE-A- 10 012 756
- DE-A- 10 042 055
- DE-A- 10 064 937
- US-A1- 2003 078 709

## Beschreibung

Die Erfindung betrifft ein Verfahren und eine Vorrichtung zur Einstellung benutzerabhängiger Parameterwerte eines Kraftfahrzeugs an mindestens einer Fahrzeug-Vorrichtung nach dem Oberbegriff des betreffenden Hauptanspruchs.

Aus der DE 100 42 055 C2 ist eine Personalisierungsvorrichtung zur benutzerabhängigen Einstellung von Parameterwerten mindestens eines Steuergerätes eines Kraftfahrzeugs bekannt. Die Personalisierungsvorrichtung weist ein Erkennungselement auf, durch das mindestens ein biometrisches Merkmal des Benutzers erfasst und durch das mindestens ein korrespondierender benutzerbezogener Code einer Vergleichseinheit übermittelt wird, durch die der benutzerbezogene Code mit in der Vergleichseinheit gespeicherten Codes vergleichbar ist Bei einem übereinstimmenden Code werden zugeordnete Parameterwerte des mindestens einen Steuergerätes des Kraftfahrzeugs eingestellt. Ändert der Benutzer die ihm anhand seines biometrischen Merkmals zugeordneten Parameterwerte, wird diese Änderung erfasst, die aktuellen Parameterwerte gespeichert und dem benutzerbezogenen Code zugeordnet.

Eine solche Vorrichtung bzw. ein entsprechendes Verfahren erfordert eine relativ teuere biometrische Erkennung, wobei auf einen Fahrzeugschlüssel und eine zugehörige Schließanlage dennoch nicht verzichtet werden kann, wenn einem dem Fahrzeug bisher unbekannter Nutzer das Fahrzeug zur Benutzung zur Verfügung gestellt werden soll.

Aus der DE 10012 756 A, als nächstliegender Stand der Technik betrachtet, ist ein Verfahren zur Abspeicherung und Abrufung personenbezogener Einstellungen in einem Kraftfahrzeug bekannt. Die Druckschrift beschäftigt sich mit der Aufgabe personenbezogene Einstellungen einfacher abrufen zu können. Hierzu wird folgendes vorgeschlagen. In einem ersten Betriebs-Modus, dem Gast-Modus, werden die nachfolgend vorgenommenen Einstellungen nicht derart abgespeichert, dass sie in einer neuen Betriebsphase des Fahrzeugs verfügbar sind. In einem zweiten Betriebs-Modus, wird den vorgenommenen Einstellungen ein Name zugeordnet Der Fahrer findet dass Fahrzeug offensichtlich beim Neubetreten mit den zuletzt vorgenommenen Einstellungen vor, wie den Einstellungen eines Gastes. Die unter einem Namen gespeicherten Einstellungen können erneut nach dem Betreten des Fahrzeugs durch entsprechende Aktionen in einem Software-Menü herbeigeführt werden.

Die Erfindung beschäftigt sich mit der Aufgabe, ein Verfahren zur Einstellung benutzerabhängiger Parameterwerte eines Kraftfahrzeugs anzugeben, welches für einen oder mehrere Hauptnutzer und für ein oder mehrere temporäre Nutzer komfortabel ist.

Diese Aufgabe wird durch den entsprechenden Anspruch vorrichtungsmäßig bzw. verfahrensmäßig gelöst. Vorteilhafte Ausgestaltungen sind Gegenstand der Unteransprüche.

Unter benutzerabhängige Parameterwerte, die an bzw. in mindestens einer Fahrzeug-Vorrichtung eingestellt werden, sollen erfindungsgemäß insbesondere benutzerabhängige Einstellwerte, wie die Einstellwerte der Sitz-, Lenkrad- und Spiegel-Position, und/oder die Einstellung bzw. Bereitstellung von benutzerabhängigen Daten, wie ein Telefon- und/oder Adress-Verzeichnis oder ein Verzeichnis von Navigations-Zielen zur Verwendung durch ein Navigationssystem, und/oder vom Benutzer bereits vorgenommene Software-Einstellungen verstanden werden. Unter benutzerabhängige Einstellung von Parameterwerten soll erfindungsgemäß also jegliche Personalisierung der Hardware bzw. von Fahrzeug-Vorrichtungen und/oder von Software eines Fahrzeugs durch den jeweils aktuellen Benutzer des Fahrzeugs verstanden werden.

Alternativ oder ergänzend soll unter Einstellung bzw. Bereitstellung von benutzerabhängigen Parameterwerten die Bereitstellung von in der Regel softwaregestützten, personen- und/oder fahrzeugbezogenen Diensten verstanden werden, wie beispielsweise "BMW Assist", ein fahrzeugbezogener Dienst in Form eines Online-Dienstes, der jedem Nutzer des Fahrzeugs zur Verfügung gestellt wird. Ist bei einem personenbezogenen Dienst nur der aktuelle Nutzer des Fahrzeugs - im Unterschied zu anderen Nutzern - zur Nutzung des betreffenden Dienstes berechtigt, so wird der Dienst dem aktuellen Nutzer bevorzugt in der von ihm oder für ihn personalisierten Weise oder Umfang und/oder mit einer personalisierten Gestaltung zur Verfügung gestellt.

Bei dem erfindungsgemäßen Verfahren zur Einstellung benutzerabhängiger Parameterwerte eines Kraftfahrzeugs an mindestens einer Fahrzeug-Vorrichtung erfolgt in einem ersten Schritt eine Abfrage, ob die aktuell eingestellten benutzerabhängigen Parameterwerte als temporäre oder als quasi permanente Parameterwerte in mindestens einem fahrzeuginternen und/oder fahrzeugextemen Datenspeicher gespeichert werden sollen.

Diese Abfrage richtet sich an den derzeitigen Nutzer des Fahrzeugs und kann akustisch, z. B. mittels Sprachausgabe, oder visuell über ein Display erfolgen. Zur Beantwortung der Abfrage kann dem Benutzer eine manuelle Eingabevorrichtung und/oder eine Spracheingabe-Vorrichtung (Spracherkennung) zur Verfügung gestellt werden.

Handelt es sich bei dem derzeitigen Nutzer um einen temporären bzw. vorübergehenden Nutzer des Fahrzeugs, wird dieser die an sich für den Hauptnutzer des Fahrzeugs vorbehaltenen quasi permanenten Parameterwerte in der Regel nicht verändern wollen. Vielmehr wird ein solcher Nutzer die Abfrage damit beantworten, dass er die Abspeicherung seiner Parameterwerte als temporäre Parameterwerte wünscht, wenn er das Fahrzeug in absehbarer Zeit erneut verwenden möchte oder wenn er diese Parameterwerte bei der späteren Verwendung eines Fahrzeugs desselben oder eines ähnlichen Typs, z.B. bei der häufigeren Nutzung von unterschiedlichen Leihfahrzeugen, zur Verfügung haben will.

Im letzteren Fall schlägt die Erfindung optional die Übertragung der Parameterwerte in einen fahrzeugexternen Datenspeicher vor, dessen Inhalt auf Wunsch des Nutzers in ein anderes Fahrzeug übertragen werden kann, woraufhin auch in diesem Fahrzeug die Parameterwerte zur Verfügung gestellt und die Fahrzeug-Vorrichtungen entsprechend eingestellt werden. Erfindungsgemäß ist dies optional auch für die Parameterwerte des Hauptnutzers des Fahrzeugs vorgesehen, so dass er die Parameterwerte seines eigenen Fahrzeugs in komfortabler Weise in ein Leihfahrzeug oder auch in ein neues Fahrzeug übertragen kann.

Bevorzugt ist eine Überschreibung und/oder Ergänzung von quasi permanenten Parameterwerten nur nach einer positiv verlaufenen Autorisierungsprüfung möglich. Hierdurch kann der Hauptnutzer sicherstellen, dass kein temporärer Nutzer die Parameterwerte bzw. Personalisierungen, die von ihm - eventuell recht zeitaufwändig - eingestellt worden sind, löscht oder verändert.

Unabhängig vom Ergebnis der Abfrage werden erfindungsgemäß stets die ggf. aktuellsten und/oder prioritätshöchsten quasi permanenten Parameterwerte eingestellt, wobei dies bevorzugt im Zeitraum zwischen der Außerbetriebnahme des Fahrzeugs und seiner Wiederinbetriebnahme erfolgt. Der aktuellste und/oder prioritätshöchste Hauptnutzer findet sein Fahrzeug also bei der Inbetriebnahme des Fahrzeugs komfortablerweise stets mit seinen persönlichen Parameterwerten vor und das auch dann, wenn er einem temporären Nutzer oder anderen Hauptnutzer sein Fahrzeug zur Verfügung gestellt und dieser Veränderungen an den Einstellungen der Fahrzeug-Vorrichtungen vorgenommen hatte. Der temporäre Nutzer kann auf die von ihm gespeicherten temporären Parameterwerte und ein anderer Hauptnutzer kann auf die ihm zugeordneten quasi permanenten Parameterwerte zurückgreifen und damit den von ihm eingestellten Zustand wiederherstellen.

Die Erfindung wird nachfolgend anhand von Ausführungsbeispielen näher beschrieben.
- Beispiel 1: beschreibt die Verwendung des erfindungsgemäßen Verfahrens durch einen oder mehrere Hauptnutzer eines Fahrzeugs;
- Beispiel 2: beschreibt die Verwendung des erfindungsgemäßen Verfahren durch einen oder mehrere temporäre Nutzer des Fahrzeugs.

Hat ein Hauptnutzer eines Fahrzeugs, insbesondere dessen Besitzer, sein Fahrzeug an einen temporären Nutzer verliehen, so wird er sein Fahrzeug in der Regel in einem Zustand vorfinden, bei dem die Sitze, die Spiegeleinstellung, die Radio-Stationen und das elektronische Telefonbuch des Fahrzeugs etc. von dem temporären Benutzer verändert bzw. verstellt worden sind. Daher muss der Hauptnutzer vor dem Antritt der Fahrt erhebliche Zeit aufwenden, um seine Einstellungen an den Fahrzeug-Vorrichtungen wieder herzustellen.

Wird das Fahrzeug danach nochmals von dem temporären Benutzer verwendet, so muss auch dieser erneut seine Einstellungen vornehmen und die Unbequemlichkeit für den Hauptnutzer beginnt von Neuem.

Spätestens beim Abstellen des Fahrzeugs wird erfindungsgemäß durch eine Vergleichs-Vorrichtung geprüft, ob im Zusammenhang mit dieser Fahrt des Fahrzeugs Veränderungen an den Einstellungen der einstellbaren Fahrzeug-Vorrichtungen vorgenommen worden sind. Sind Einstellungen geändert worden, so erfolgt eine akustische oder visuelle Abfrage, ob die aktuellen Einstellungen bzw. deren Parameterwerte als temporäre oder quasi permanente Parameterwerte gespeichert werden sollen.

Wünscht der Benutzer eine Abspeicherung der Parameterwerte als quasi permanente Parameterwerte, was für einen oder mehrere Hauptnutzer vorgesehen ist, erfolgt eine Autorisierungsprüfung, z.B. durch die Eingabe einer PIN (Persönliche ldentifizierungs-Nummer) oder durch die Erfassung eines biometrischen Merkmals des Benutzers, z.B. durch die Erkennung der Stimme. Bei positivem Ausgang der Prüfung, werden die Parameterwerte als quasi permanente Parameterwerte in mindestens einem im Fahrzeug vorgesehenen Datenspeicher und optional in mindestens einem fahrzeugextemen Speicher gespeichert. Gibt es mehr als einen Hauptnutzer werden deren quasi permanenten Parameterwerte unter deren Namen oder dgl. in entsprechender Weise gespeichert.

Bei dem fahrzeugextemen, mitführbaren Speicher handelt es sich bevorzugt um einen Speicher in dem Fahrzeugschlüssel des Hauptnutzers und/oder um einen Speicher in einem Mobiltelefon, in einer SIM-Karte (Subscriber-Identity-Module), in einem PDA (Personal-Digital-Assistant), in einer Chipkarte oder in einem Notebook des Hauptnutzers. Insbesondere über den Bluetooth-Standard oder eine andere geeignete Form der Übermittlung können erfindungsgemäß die in dem externen Datenspeicher gespeicherten Parameterwerte in ein anderes Fahrzeug "importiert" und dort zur personenbezogenen bzw. benutzerabhängigen Einstellung der Fahrzeug-Vorrichtungen dieses Fahrzeugs verwendet werden.

Erfindungsgemäß werden unabhängig vom Ergebnis der Abfrage nach temporärer oder quasi permanenter Speicherung nach dem Abstellen des Fahrzeugs stets die quasi permanenten Parameterwerte eingestellt. Damit wird der Hauptnutzer des Fahrzeugs bevorzugt und er findet sein Fahrzeug auch nach einem Verleihen seines Fahrzeugs an einen temporären Nutzer mit seinen Einstellwerten vor und kann das Fahrzeug unmittelbar in Betrieb nehmen. Gibt es mehrere Hauptnutzer unterschiedlicher Priorität, so werden unabhängig vom Ergebnis der Abfrage nach dem Abstellen des Fahrzeugs stets die Parameterwerte des prioritätshöchsten Hauptnutzers eingestellt. Haben die Hauptnutzer dieselbe Priorität, werden nach dem Abstellen des Fahrzeugs die aktuellsten Parameterwerte desjenigen Hauptnutzers an den Fahrzeug-Vorrichtungen eingestellt, der das Fahrzeug als letzter verwendet hat.

Das nachfolgende zweite Ausführungsbeispiel beschreibt die Verwendung des erfindungsgemäßen Verfahrens durch einen oder mehrere temporäre Nutzer eines Fahrzeugs. Steigt ein temporärer Nutzer in das Fahrzeug eines Hauptnutzers ein, das ihm der Hauptnutzer überlassen hat, findet er ein Fahrzeug vor, dessen einstellbare Fahrzeug-Vorrichtungen entsprechend der Parameterwerte des Hauptnutzers eingestellt sind. Der temporäre Nutzer stellt die Fahrzeug-Vorrichtungen entsprechend seinen Bedürfnissen ein. Insbesondere nach dem Abstellen des Motors wird der temporäre Nutzer visuell oder akustisch befragt, ob er die eingestellten Parameter in einem fahrzeuginternen Datenspeicher speichern und/oder in einem von dem temporären Nutzer mitgeführten Datenträger übertragen und dort speichern möchte, wie ein Mobiltelefon, ein PDA oder eine Chipkarte. Ohne Autorisierungsprüfung werden die Parameterwerte des temporären Nutzers als temporäre Parameterwerte gespeichert bzw. übertragen, z.B. unter Verwendung des Bluetooth-Standards. Eine Speicherung der Parameter als quasi permanente Parameterwerte, die für einen oder mehrere Hauptnutzer vorgesehen ist, kann trotz erfindungsgemäßer Abfrage in der Regel nicht veranlasst werden, weil dies erfindungsgemäß erst nach einer Autorisierungsprüfung erfolgt, die in der Regel lediglich der Hauptnutzer "besteht", wie bereits beschrieben.

Verlässt der temporäre Nutzer das Fahrzeug und besteigt es nach einiger Zeit erneut, findet er erneut die Einstellungen des Hauptnutzers vor. Um einem temporären Nutzer das erneute Einstellen zu ersparen, erfolgt - nach der Nutzung des Fahrzeugs durch einen temporären Nutzer - erfindungsgemäß nach dem Einsteigen eine visuelle und/oder akustische Abfrage, ob er die Verwendung von Parameterwerten wünscht, die bereits als temporäre Parameterwerte aufgrund einer früheren Benutzung des Fahrzeugs durch diesen temporären Nutzer oder die als quasi permanente Parameterwerte für einen oder mehrere Hauptnutzer gespeichert worden sind. Wählt er einen Satz gespeicherter Parameterwerte in geeigneter Weise aus, z. B. durch Spracheingabe und/oder durch Stimm-Erkennung unter Zuordnung der für die erkannte Stimme gespeicherten Parameterwerte, so werden diese zur Einstellung der Fahrzeug-Vorrichtungen verwendet. Bevor dies geschieht kann optional eine Autorisierungsprüfung für temporäre Parameterwerte und/oder für quasi permanente Parameterwerte vorgesehen sein; dies scheint insbesondere dann sinnvoll, wenn die "Einstellungen" bzw. Parameterwerte ein persönliches Telefonbuch zur Verwendung durch ein im Fahrzeug vorgesehenes Telefon oder sonstige eher persönliche bzw. vertrauliche Informationen umfassen.

Alternativ oder ergänzend kann abgefragt werden, ob mitgeführte Parameterwerte in das Fahrzeug übertragen und dort als temporäre und/oder als quasi permanente Parameterwerte gespeichert bzw. verwendet werden sollen. Müssen hierzu bereits gespeicherte Parameterwerte, insbesondere solche eines Hauptnutzers, wegen mangelnder Speicherkapazität überschrieben werden, geschieht dies bevorzugt erst nach einer Autorisierungsprüfung. Werden die Parameterwerte beispielsweise in einem Bluetooth-Handy oder sonstigen Handy mitgeführt, kann dieses Mobiltelefon in einfacher Weise mit der Freisprecheinrichtung und/oder einem im Fahrzeug vorgesehenen Telefonbuch und Wählvorrichtung gekoppelt und auf das Telefonbuch des Handys zugegriffen werden. Ebenso können vom temporären Nutzer oder Hauptnutzer vorgenommene Einstellungen bzw. Parameterwerte in den fahrzeugextemen Datenspeicher zur späteren erneuten Verwendung oder zur Verwendung in einem anderen Fahrzeug übertragen und dort gespeichert werden, wobei die Übertragung wiederum bevorzugt über Bluetooth oder einen anderen Verbindungsstandard erfolgt.

## Patentansprüche

1. Verfahren zur Einstellung benutzerabhängiger Parameterwerte an bzw. in mindestens einer Fahrzeug-Vorrichtung eines Kraftfahrzeugs und zur Speicherung der Einstellungen in mindestens einem fahrzeugintemen und/oder fahrzeugextemen Datenspeicher, in einem ersten Schritt eine Abfrage erfolgt, ob die aktuell eingestellten benutzerabhängigen Parameterwerte als temporäre oder als quasi permanente Parameterwerte in dem mindestens einen fahrzeugintemen und/oder fahrzeugextemen Datenspeicher gespeichert werden sollen, und in einem zweiten Schritt die aktuell eingestellten benutzerabhängigen Parameterwerte entsprechend der Antwort auf die Abfrage gespeichert werden, **dadurch gekennzeichnet, dass**
- in einem dritten Schritt, unabhängig vom Ergebnis der Abfrage, stets die quasi permanenten Parameterwerte eingestellt werden, und
- die aktuellsten quasi permanenten Parameterwerte und/oder prioritätshöchsten quasi permanenten Parameterwerte nach dem Verlassen des Fahrzeugs bzw. im Zeitraum nach dem Erschließen des Fahrzeugs und vor einem nachfolgenden Öffnen des Fahrzeugs an der mindestens einen Fahrzeugvorrichtung eingestellt werden.

2. Verfahren nach Anspruch 1, **dadurch gekennzeichnet, dass** die benutzerabhängigen Parameterwerte, die an bzw. in mindestens einer Fahrzeug-Vorrichtung eingestellt werden, benutzerabhängige Einstellwerte, wie die Einstellwerte der Sitz-, Lenkrad- und Spiegel-Position, und/oder benutzerabhängige Daten, wie ein Telefon- und/oder Adress-Verzeichnis oder ein Verzeichnis von Navigations-Zielen zur Verwendung durch ein Navigationssystem, und/oder vom Benutzer bereits vorgenommene Software-Einstellungen sind.

3. Verfahren nach einem der Ansprüche 1 oder 2, **dadurch gekennzeichnet, dass** die aktuell eingestellten benutzerabhängigen Parameterwerte erst nach einer positiv verlaufenden Autorisienrngsprüfung, wie insbesondere durch Stimm-Erkennung, als aktuellste quasi permanente Parameterwerte und/oder prioritätshöchste quasi permanente Parameterwerte gespeichert werden, wobei diese zusätzlich zu weiteren quasi permanenten Parameterwerten gespeichert werden oder andere quasi permanente Parameterwerte ersetzen.

4. Verfahren nach Anspruch 3, **dadurch gekennzeichnet, dass** die aktuell eingestellten benutzerabhängigen Parameterwerte in einem aktuell zum Betrieb des Fahrzeugs benutzten bzw. mitgeführten fahrzeugextemen Datenspeicher, wie insbesondere ein Fahrzeugschlüssel mit Datenspeicher, gespeichert werden.

5. Verfahren nach einem der Ansprüche 1 bis 4, **dadurch gekennzeichnet, dass** die aktuell eingestellten benutzerabhängigen Parameterwerte als temporäre Parameterwerte unter Zuordnung eines Namens oder einer anderen individualisierenden Information in dem fahrzeugintemen Datenspeicher gespeichert werden und nach dem Öffnen des Fahrzeugs eine Abfrage erfolgt, ob die Einstellung der Fahrzeug-Vorrichtungen entsprechend gespeicherter temporärer Parameterwerte erfolgen soll.

6. Verfahren nach einem der Ansprüche 1 bis 5, **dadurch gekennzeichnet, dass** die temporäre Parameterwerte in einem sogenannten FIFO-Speicher bzw. Schieberegister-Speicher gespeichert werden, wobei ein Satz jüngerer temporärer Parameterwerte einen Satz älterer temporärer Parameterwerte ersetzt.

7. Verfahren nach einem der Ansprüche 1 bis 6, **gekennzeichnet durch** einen Vergleich von in dem fahrzeugextemen Datenspeicher gespeicherten quasi permanenten Parameterwerten mit den aktuell im Fahrzeug eingestellten Parameterwerten, wobei bei einer Abweichung die in dem fahrzeugextemen Datenspeicher gespeicherten quasi permanenten Parameterwerte im Fahrzeug eingestellt werden.

8. Verfahren nach einem der Ansprüche 1 bis 7, **dadurch gekennzeichnet, dass** die aktuell eingestellten benutzerabhängigen Parameterwerte als temporäre oder als quasi permanente Parameterwerte in dem mindestens einen fahrzeugextemen Datenspeicher gespeichert werden, der bevorzugt von einem Mobiltelefon, einer SIM-Karte, d.h. Subscriber-Identity-Module, einem PDA, einer Chipkarte oder einem Notebook oder dgl. bereitgestellt wird und die Übertragung vom Fahrzeug in den fahrzeugextemen Datenspeicher drahtlos, vorzugsweise über den Bluetooth-Standard, vorgenommen wird.

9. Verfahren nach Anspruch 8, **dadurch gekennzeichnet, dass** die benutzerabhängigen Parameterwerte aus dem mindestens einen fahrzeugextemen Datenspeicher drahtlos, vorzugsweise über den Bluetooth-Standard, in ein anderes Fahrzeug zur Einstellung von dessen Fahrzeugvorrichtungen übertragen werden, nachdem eine Autorisierungsprüfung einer Autorisierungs-Prüf-Vorrichtung des anderen Fahrzeugs positiv verlaufen ist.

10. Verfahren nach Anspruch 9, **dadurch gekennzeichnet, dass** die benutzerabhängigen Parameterwerte bei dem positiven Verlauf einer ersten Autorisierungsprüfung als temporäre Parameterwerte und bei dem positiven Verlauf einer zweiten Autorisierungsprüfung als quasi permanente Parameterwerte in dem anderen Fahrzeug gespeichert werden.

11. Vorrichtung zur Einstellung benutzerabhängiger Parameterwerte eines Kraftfahrzeugs an mindestens einer Fahrzeug-Vorrichtung, wie insbesondere die Sitz-, Lenkrad- und Spiegelposition, und zur Speicherung der Einstellungen in mindestens einem fahrzeugintemen und/oder fahrzeugextemen Datenspeicher, **dadurch gekennzeichnet, dass** die Vorrichtung ein Verfahren nach einem der Ansprüche 1 bis 10 durchführt.

## Claims

1. A method for adjusting user-dependent parameter values on or in at least one automotive device of a motor vehicle and for saving the settings in at least one data memory inside and/or outside the vehicle, in a first step there is a query whether the currently set user-dependent parameter values are to be saved as temporary or as quasi-permanent parameter values in the at least one data memory inside and/or outside the vehicle, and in a second step the currently set user-dependent parameter values are saved according to the reply to the query, **characterised in that**
- in a third step, the quasi-permanent parameter values are always set, regardless of the result of the query, and
- the most current quasi-permanent parameter values and/or highest priority quasi-permanent parameter values are set on the at least one automotive device after the user leaves the vehicle or during the period of time after the vehicle has been locked and before the vehicle is subsequently opened.

2. A method according to claim 1, **characterised in that** the user-dependent parameter values which are set on or in at least one automotive device are user-dependent settings, such as the settings of the seat position, steering wheel position and mirror position, and/or user-dependent data, such as a telephone directory and/or address directory or a directory of navigation destinations to be used by a navigation system, and/or software settings already made by the user.

3. A method according to either claim 1 or claim 2, **characterised in that** the currently set user-dependent parameter values are only saved after a positive outcome of an authorisation check, such as for example by voice recognition, as the most current quasi-permanent parameter values and/or the highest priority quasi-permanent parameter values, the currently set user-dependent parameter values being saved in addition to further quasi-permanent parameter values or replacing other quasi-permanent parameter values.

4. A method according to claim 3, **characterised in that** the currently set user-dependent parameter values are saved in a data memory which is outside the vehicle and is currently used or carried to operate the vehicle, such as more especially a vehicle key with a data memory.

5. A method according to any one of claims 1 to 4, **characterised in that** the currently set user-dependent parameter values are saved in a data memory inside the vehicle as temporary parameter values with the allocation of a name or other individualising information, and when the vehicle is opened, there is a query whether the automotive devices are to be adjusted according to saved temporary parameter values.

6. A method according to any one of claims 1 to 5, **characterised in that** the temporary parameter values are saved in a so-called FIFO memory or shift register memory, a set of more recent temporary parameter values replacing a set of earlier temporary parameter values.

7. A method according to any one of claims 1 to 6, **characterised by** a comparison of quasi-permanent parameter values stored in the data memory outside the vehicle with the parameter values currently set in the vehicle, the quasi-permanent parameter values stored in the data memory outside the vehicle being set in the vehicle when the comparison results in a difference.

8. A method according to any one of claims 1 to 7, **characterised in that** the currently set user-dependent parameter values are saved as temporary or as quasi-permanent parameter values in the at least one data memory outside the vehicle preferably provided in a mobile telephone, a SIM card, i.e. subscriber identity module, a PDA, a chip card or a notebook or the like, and are transmitted from the vehicle to the data memory outside the vehicle as a wireless transmission, preferably via the Bluetooth standard.

9. A method according to claim 8, **characterised in that** the user-dependent parameter values are transmitted from the at least one data memory outside the vehicle by wireless transmission, preferably via the Bluetooth standard, to another vehicle to adjust its automotive devices after there has been a positive outcome of an authorisation check by an authorisation checking device in the other vehicle.

10. A method according to claim 9, **characterised in that** the user-dependent parameter values are saved as temporary parameter values if there is a positive outcome of a first authorisation check and, if there is a positive outcome of a second authorisation check, are saved as quasi-permanent parameter values in the other vehicle.

11. A device for adjusting user-dependent parameter values of a motor vehicle on at least one automotive device, such as more especially the seat position, steering wheel position and mirror position, and for saving the settings in at least one data memory inside the vehicle and/or outside the vehicle, **characterised in that** the device implements a method according to any one of claims 1 to 10.

## Revendications

1. Procédé pour régler des valeurs paramétriques dépendant de l'utilisateur sur ou dans au moins un dispositif d'un véhicule automobile et pour enregistrer les réglages réalisés dans au moins une mémoire de données interne et/ou externe au véhicule, selon lequel, dans une première étape il est demandé si les valeurs paramétriques dépendant de l'utilisateur et actuellement réglées doivent être enregistrées en tant que données temporaires et/ou quasi permanentes dans la mémoire de données, au nombre d'une au moins, externe et/ ou interne au véhicule, avec, dans une deuxième étape, en correspondance avec la réponse à la demande précédente, enregistrement des valeurs paramétriques dépendant de l'utilisateur, actuellement réglées,
**caractérisé en ce que**
- dans une troisième étape, indépendamment de la réponse à la demande, les valeurs paramétriques quasi permanentes sont toujours enregistrées, et
- les valeurs paramétriques quasi permanentes, actuelles et/ou à priorité la plus élevée, après abandon du véhicule ou dans l'intervalle de temps entre la fermeture du véhicule et son ouverture à nouveau, sont enregistrées sur au moins un dispositif du véhicule.

2. Procédé selon la revendication 1,
**caractérisé en ce que**
les valeurs paramétriques dépendant de l'utilisateur, qui ont été réglées dans ou sur au moins un dispositif du véhicule, sont des valeurs de réglage dépendant de l'utilisateur, comme les valeurs de réglage du siège, du volant, de la position du rétroviseur et/ou des données dépendant de l'utilisateur, comme un répertoire téléphonique et/ou un répertoire d'adresses ou un répertoire de destinations à utiliser par un système de navigation, et/ou des réglages de logiciel déjà effectuées par l'utilisateur.

3. Procédé selon la revendication 1 ou 2,
**caractérisé en ce que**
les valeurs paramétriques dépendant de l'utilisateur et actuellement réglées sont, seulement après un contrôle positif d'autorisation, tel qu'une reconnaissance vocale notamment, enregistrées comme valeurs paramétriques actuelles quasi permanentes et/ou valeurs quasi permanentes à priorité la plus élevée, ces valeurs étant enregistrées en plus d'autres valeurs paramétriques quasi permanentes ou en remplacement d'autres valeurs paramétriques quasi permanentes.

4. Procédé selon la revendication 3,
**caractérisé en ce que**
les valeurs paramétriques dépendant de l'utilisateur et actuellement réglées sont enregistrées dans une mémoire de données externe au véhicule utilisée actuellement c'est-à-dire amenée pour faire fonctionner le véhicule, comme par exemple une clé de contact équipée d'une mémoire de données.

5. Procédé selon une des revendications 1 à 4,
**caractérisé en ce que**
les valeurs paramétriques dépendant de l'utilisateur et actuellement réglées sont enregistrées dans la mémoire de données interne au véhicule, en tant que valeurs paramétriques temporaires en association avec un nom ou une autre information individualisante, et, après ouverture du véhicule, il est demandé si le réglage des dispositifs du véhicule doit être effectué en correspondance avec les valeurs paramétriques temporaires enregistrées.

6. Procédé selon une des revendications 1 à 5,
**caractérisé en ce que**
les valeurs paramétriques temporaires sont enregistrées dans ce qu'on appelle une mémoire FIFO ou dans un registre à décalage, avec remplacement d'une série de valeurs paramétriques temporaires plus anciennes par des valeurs paramétriques temporaires plus récentes.

7. Procédé selon une des revendications 1 à 6,
**caractérisé en ce que**
des valeurs paramétriques quasi permanentes enregistrées dans la mémoire de données externe au véhicule sont comparées aux valeurs paramétriques actuellement réglées dans le véhicule et, dans le cas d'un écart, les valeurs paramétriques quasi permanentes enregistrées dans la mémoire de données externe au véhicule sont réglées dans le véhicule.

8. Procédé selon une des revendications 1 à 7,
**caractérisé en ce que**
les valeurs paramétriques actuellement réglées sont enregistrées en tant que valeurs temporaires ou en tant que valeurs quasi permanentes dans la mémoire de données externe au véhicule, au nombre d'une au moins, qui est mise à disposition de préférence par un téléphone mobile, une carte SIM c'est-à-dire un subscriber identity module, un PDA, une carte à puce ou un notebook ou similaire, et la transmission du véhicule à la mémoire de données qui lui est externe a lieu sans fil, de préférence par le standard bluetooth.

9. Procédé selon la revendication 8,
**caractérisé en ce que**
les valeurs paramétriques dépendant de l'utilisateur sont transmises sans fil, de préférence par le standard bluetooth, de la mémoire de données externe au véhicule, au nombre d'une au moins, à un autre véhicule automobile pour régler les dispositifs de celui-ci, après qu'ait été effectué positivement un contrôle dans un appareil de contrôle d'autorisation de l'autre véhicule.

10. Procédé selon la revendication 9,
**caractérisé en ce que**
les valeurs paramétriques dépendant de l'utilisateur sont enregistrées dans l'autre véhicule, en tant que valeurs temporaires à la suite d'un premier contrôle positif d'autorisation, et en tant que valeurs quasi permanentes à la suite d'un second contrôle positif d'autorisation.

11. Dispositif pour, dans un véhicule automobile, régler des valeurs paramétriques dépendant de l'utilisateur, dans au moins un dispositif de véhicule, comme notamment la position d'un siège, du volant et du rétroviseur, et pour enregistrer les réglages dans au moins une mémoire de données interne et/ou externe au véhicule,
**caractérisé en ce que**
le dispositif met en oeuvre un procédé selon les revendications 1 à 10.
